**Europäisches Patentamt**

**European Patent Office**

**Office européen des brevets**

(19)

(11) Veröffentlichungsnummer: **0 038 920**

**B1**

(12)

# EUROPÄISCHE PATENTSCHRIFT

(45) Veröffentlichungstag der Patentschrift:
**13.08.86**

(21) Anmeldenummer: **81101505.6**

(22) Anmeldetag: **03.03.81**

(51) Int. Cl.⁴: **B 60 C 19/00,** B 60 B 21/12

(54) **Gasgefüllter Fahrzeugreifen.**

(30) Priorität: **26.04.80 DE 3016255**

(43) Veröffentlichungstag der Anmeldung:
**04.11.81 Patentblatt 81/44**

(45) Bekanntmachung des Hinweises auf die Patenterteilung:
**13.08.86 Patentblatt 86/33**

(84) Benannte Vertragsstaaten:
**FR GB IT**

(56) Entgegenhaltungen:
**DE-A-2 040 898**
**DE-A-2 750 743**
**DE-A-2 946 275**
**FR-A-1 399 709**
**FR-A-1 533 245**
**GB-A-848 711**
**US-A-2 290 121**
**US-A-2 695 047**

(73) Patentinhaber: **Messerschmitt- Bölkow- Blohm Gesellschaft mit beschränkter Haftung, Robert- Koch- Strasse, D-8012 Ottobrunn (DE)**

(72) Erfinder: **Bschorr, Oskar, Dr. Dipl.- Ing., Keplerstrasse 11, D-8000 München 80 (DE)**

EP 0 038 920 B1

**Beschreibung**

Die Erfindung betrifft einen gasgefüllten Fahrzeugreifen, in oder an dem mit dem Reifen oder Schlauch kraft- und momentschlüssig verbundene Schwingungsabsorber vorgesehen bzw. angebracht sind.

Insbesondere bei erhöhten Geschwindigkeiten neigen Fahrzeugreifen zu einer Schallabstrahlung, die vielfach als akustische Belästigung empfunden wird und um deren Verminderung die Hersteller bemüht sind. Die Schallabstrahlung entsteht im wesentlichen dadurch, dasich aufgrund von Straßenunebenheiten und infolge des segmentierten Reifenprofils Körperschallschwingungen im Reifen aufbauen, die wiederum sekundär zur Abstrahlung von Luftschall führen. Das im Gegensatz zum Körperschall nur im Kontaktbereich zwischen Reifen und Straße abstrahlende Airpumping ist demgegenüber von untergeordneter Bedeutung.

Bisher ergriffene Maßnahmen zur Unterdrückung des Reifenlärms bezogen sich vor allem auf die Gestaltung des Reifenprofils sowie auf die Auswahl besonderer Gummimischungen. Zur Vermeidung des Airpumping wurden offene Reifenprofile verwendet, um so Lufteinschlüsse zu vermeiden. Mit dem Ziel der Ausschaltung lästiger Resonanzerscheinungen wurde weiterhin die Verwendung ungleicher Profilteilungen vorgeschlagen. Diese Maßnahmen konnten jedoch nur relativ unbedeutende Teilerfolge bewirken. Dies gilt auch für die Verwendung dämpfender Gummimischungen, deren Verlustfaktor bezüglich der Umsetzung von Schallenergie in Wärme begrenzt ist, und die vor allem an die relativ steife, im Kraftfluß stehende Karkasse dämpfungsmäßig schlecht anzupassen sind.

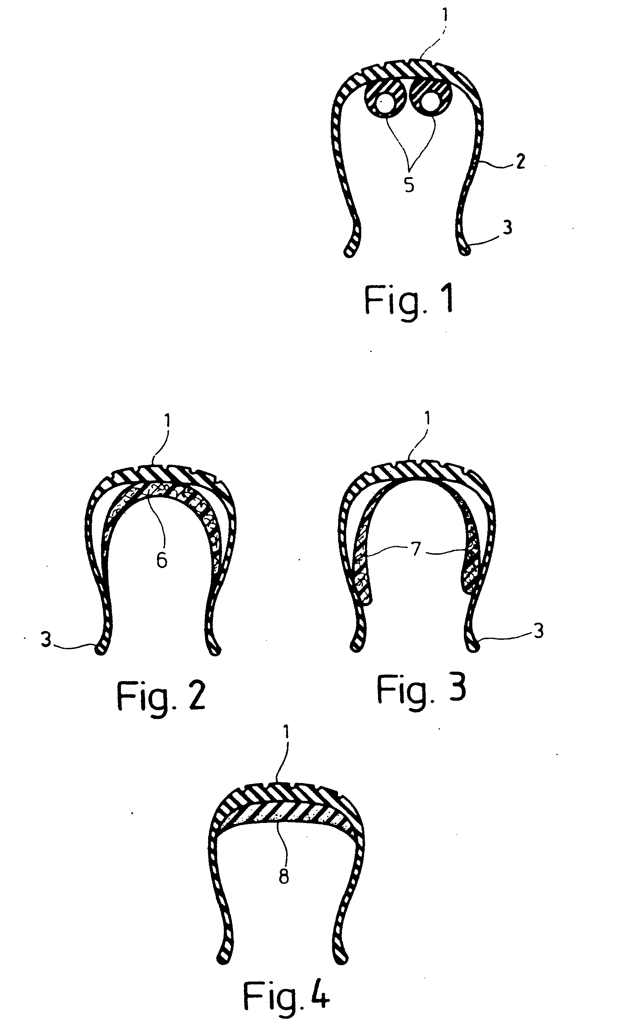

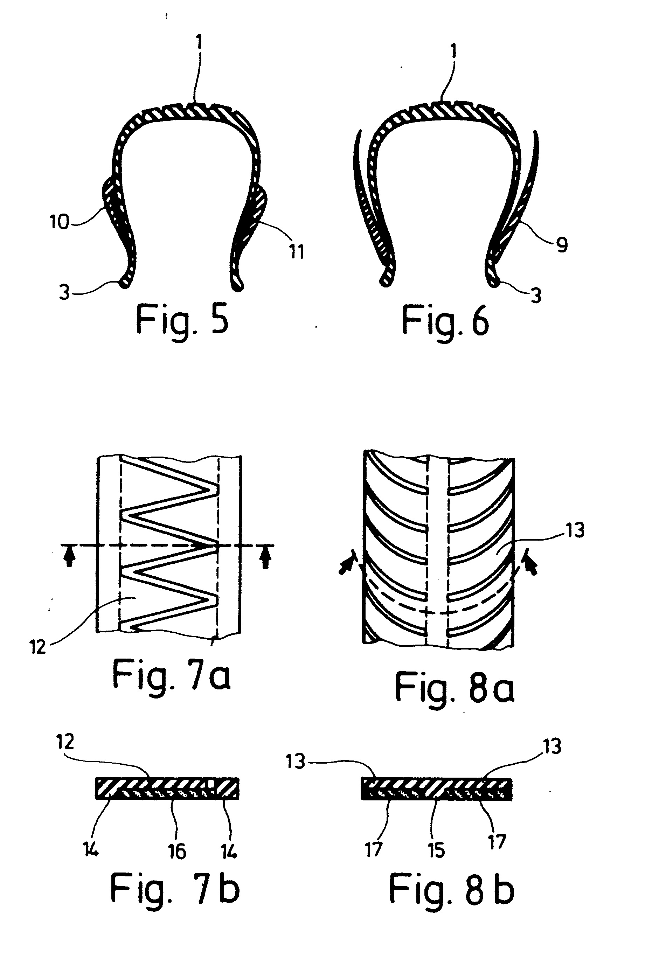

In diesem Zusammenhang ist aus der älteren im Sinne von Art.54(3) EPÜ nicht vorveröffentlichen Patentanmeldung EP-AI-0 029 120 (Veröffentlichungstag 27.05.81) ein Fahrzeugreifen bekannt, an dessen der Lauffläche gegenüberliegenden Innenwand pyramidenförmige Schaumstoffkörper angebracht sind, deren Spitzen ins Reifeninnere weisen (siehe die dortigen Figuren 1 und 8). Dieser Ausgestaltung liegt die Problematik zugrunde, daß beim Fahren die vibrierenden Reifen Schallenergie in den Reifeninnenraum übertragen, wobei es aufgrund der geringen Innenabsorption zu einer Pegelüberhöhung kommt. Dies führt schließlich zu einer Schallabstrahlung durch die nur schwach dämmenden Seitenflächen nach außen. Der Zweck der oben beschriebenen, konstruktiven Ausgestaltung des Fahrzeugreifens besteht darin, die Lärmabstrahlung nach außen effektiv zu senken, wobei infolge der Ansicht, daß Maßnahmen zur Verringerung der Körperschallabstrahlung bisher wenig erfolgreich gewesen seien, primär die Ausschaltung von Pegelüberhöhungen im Reifeninneren beabsichtigt ist. Die pyramidenförmigen Schaumstoffkörper an der Reifeninnenfläche sollen also den im Reifeninneren sich aufbauenden Luftschallpegel durch Absorption dämpfen. Von diesem ihrem Hauptzweck abgesehen besitzen die pyramidenförmigen Schaumstoffkörper aber auch noch die Eigenschaft von Schwingungsabsorbern zur Körperschalldämpfung, wenn auch in geringem Ausmaße.

Derartige Schwingungsabsorber sind Wellenleiter abnehmenden Querschnitts oder zunehmender Porosität, die, mit ihrem Ende größten Querschnitts oder geringster Porosität auf einen schwingenden Körper aufgesetzt, in der Lage sind, von diesem Schallenergie abzuleiten und unter Vermeidung von Reflexionen in Wärme umzusetzen. Um einen optimalen Übergang der Schallenergie von dem schwingenden Körper, in diesem Falle dem Reifen, auf den Schwingungsabsorber zu ermöglichen, ist es erforderlich, diesen kraft- und momentschlüssig mit jenem zu verbinden. Die Verwendung von Schwingungsabsorbern im vorliegenden Falle ist besonders deswegen von Vorteil, weil diese ein breitbandiges Dämpfungsspektrum aufweisen, das erst oberhalb einer gewissen, als Cut-off-Frequenz bezeichneten Frequenz einsetzt und anschließend nahezu konstant verläuft. Die Cut-off-Frequenz kann durch die Dimensionen des Schwingungsabsorbers beeinflußt werden. Tiefe Frequenzen werden somit nicht gedämpft, was durchaus wünschenswert ist, da eine Dämpfung der tiefliegenden Walkfrequenzen zu einer Erhöhung des Rollwiderstandes führen würde. Die Schwingungsabsorber sind sehr gut dazu geeignet, gerade die die Lärmabstrahlung verursachenden, zwischen 1 und 2 kHz liegenden Reifenschwingungen zu dämpfen.

Im vorliegenden Zusammenhang ist es weiterhin aus der DE-A-20 40 898 bekannt, die Reifeninnenfläche ganz oder teilweise mit einem schallschluckenden Belag zu versehen. Dieser kann beispielsweise aus einem Gummi- oder Kunststoffschaum bestehen und als Anstrich oder Auftrag aufgebracht werden, der danach schäumt und polymerisiert. Die dem Reifeninneren zugekehrte Seite des Belages soll offene Zellen bzw. eine schallresorbierende Oberfläche besitzen, damit der Schall nicht reflektiert werden kann. Auch hier ist demnach beabsichtigt, den im Reifeninneren bereits bestehenden Schall zu absorbieren, so daß dieser nicht mehr durch die Reifenwände nach außen dringen kann. Es handelt sich demnach um eine zur Absorption von Luftschall ausgebildete Dämpfungsschicht, wobei das Problem der Körperschallabsorption nicht angesprochen ist. Vielmehr ist bei diesen bekannten Fahrzeugreifen Voraussetzung, daß bereits Schallenergie in den Luftraum des Reifeninneren abgestrahlt wurde, welche nun wiederum durch den schallschluckenden Belag absorbiert werden soll. Diese Methode, welche im Prinzip bei der zuerst erwähnten EP-AI-0 029 120 ebenfalls zur Anwendung kommt, hat jedoch den Nachteil, daß die Lärmverminderung gleichsam auf einem Umweg angestrebt wird und somit noch nicht optimal sein kann.

Der Erfindung liegt daher die Aufgabe zugrunde, einen Fahrzeugreifen der eingangs genannten Art bereitzustellen, bei dem die lärmabstrahlende Wirkung der Reifenschwingungen auf möglichst direkte und effektive Weise verringert ist. Diese Aufgabe ist gemäß der Erfindung durch die Anwendung von Schwingungsabsorbern gelöst, welche die in den einander nebengeordneten Ansprüchen wiedergegebenen Merkmale aufweisen.

Die Schwingungsabsorber können prinzipiell an jeder Stelle des Reifens, natürlich mit Ausnahme der Lauffläche selbst, angebracht sein. Im Reifeninneren sind die Schwingungsabsorber keinerlei verschleißenden Äußeren Einflüssen, wie etwa Witterungsbedingungen oder durch Stöße oder Reibungen verursachten Abnutzungen, direkt ausgesetzt. Gegenüber der Lauffläche des Reifens angebrachte Schwingungsabsorber haben den Vorteil, sich besonders nahe an dem Bereich des Reifens zu befinden, an dem der Körperschall direkt entsteht, nämlich der Lauffläche. Diese Art der Anbringung erhöht dort die Eingangsimpedanz, so daß von vornherein weniger Schwingungsenergie in den Reifen eingeleitet wird. In Abweichung hiervon ist es jedoch auch möglich, die Schwingungsabsorber an den inneren Seitenflächen anzubringen. Da an den Seitenflächen aufgrund der geringeren Massenbelegung die lokale Impedanz herabgesetzt ist, reichen dort relativ geringe Zusatzdämpfungen aus, um die Schallabstrahlung von den Seitenflächen wirksam zu verringern.

Die Schwingungsabsorber können in Form von Einzelabsorbern an den Innenflächen des Reifens angebracht sein. Sie können jedoch auch längliche Gebilde sein, deren Längserstreckung mit der Laufrichtung des Reifens übereinstimmt. Falls die gegenüber der Lauffläche angebracht sind, kann es zweckmäßig sein, sie den sich in Laufrichtung erstreckenden Profilrillen folgen zu lassen. Weiterhin ist es auch möglich, die Schwingungsabsorber so anzuordnen, daß deren Längserstreckung zumindest teilweise quer zur Laufrichtung des Reifens gerichtet ist.

Wenn die Anbringung der Schwingungsabsorber im Reifeninneren auch besondere Vorteile aufweist, so ist es doch möglich, diese auch an den Äußeren Seitenflächen der Reifen anzubringen.

Im folgenden werden Ausführungsformen der Erfindung mit Hilfe der Abbildungen näher erläutert. Es zeigen in schematischer Weise:

Fig. 1 bis 4 im Querschnitt dargestellte luftgefüllte Reifen mit in deren Innenraum angebrachten Schwingungsabsorbern,

Fig. 5 und 6 im Querschnitt dargestellte luftgefüllte Reifen mit an den Äußeren Seitenflächen angebrachten Schwingungsabsorbern,

Fig. 7a, b, 8a, b bandförmig ausgebildete Schwingungsabsorber.

In den Figuren 1 bis 6 bedeutet 1 die Lauffläche des Reifens, 2 dessen Seitenfläche sowie 3 die Reifenwulst. Der in Fig. 1 dargestellte Reifen trägt in seinem Innenraum Schwingungsabsorber 5, die rohrförmig ausgebildet sind und im Querschnitt etwa die Form eines Kreisringes mit exzentrischem Innenkreis aufweisen. Dabei liegen die dickeren Rohrwandpartien an der Reifeninnenfläche an. Anstelle eines kreisringförmigen Querschnittes kann auch ein etwa ellipsenringförmiger Querschnitt Verwendung finden. Diese rohrformigen, aus einem Elastomer bestehendenSchwingungsabsorber laufen ohne Unterbrechung entlang des gesamtem Innenumfanges des Reifens um. Geringe Abweichungen vom der Kreisring- bzw. Ellipsenringform des Querschnitts liegen insofern vor, als eine Beruhrungsfläche ausreichender Breite mit der Reifenwand gegeben sein muß, so daß, ausgehend von dieser Berührungsfläche, zu beiden Seiten des Innenkreises bzw. der Innenellipse auch hier eine gewissermaßen doppelte Verjüngung des Absorberquerschnitts vorliegt.

Bei dem in Fig. 2 dargestellten Reifen weist der Schwimgungsabsorber 6 im Querschnitt etwa Sichelform auf. Dabei liegt die Sichelmitte an der der Lauffläche 1 gegenüberliegenden Reifeninnenfläche an, während die Sichelenden mit den zur Reifenwulst 3 hin gelegenen Bereichen der Reifeninnenfläche Kontakt haben, Auch hier läuft der dargestellte Querschnitt ohne Unterbrechung innerhalb des gesamten Reifeninnenraumes um. Aus Stabilitätsgründen ist es zweckmäßig, die den Sichelenden entsprechenden Kanten des Schwingungsabsorbers an den Reifenseitenwänden zu fixieren. Als Absorbermaterial kann Kunststoff, mit Textilfasern verstärkter Kunststoff oder Gummi verwendet werden, ohne daß die verwendbaren Materialien hierauf beschränkte wären.

Der Schwingungsabsorber 7 des in Fig. 3 dargestellten Reifens weist im Querschnitt etwa die Form zweier Halbsicheln auf. Diese liegen mit ihren spitzen Enden an der der Lauffläche 1 gegenüberliegenden Reifeninnenfläche und mit ihren breiten Enden an den zur Reifenwulst 3 hin gelegenen Bereichen der Reifeninnenfläche an. Bezüglich der verwendbaren Materialien gilt das zur Fig. 2 Gesagte. Der Vorteil dieser Anordnuug besteht darin, daß zusätzlich zur Schallabsorption eine verstärkte Schalldämmung eintritt, da die Reifenseitenwände nunmehr praktisch als Doppelwände ausgebildet sind, ebenso wie bei Fig. 2.

Beim Reifen der Fig. 4 wird der Schwingungsabsorber 8 durch eine poröse Schicht gebildet, deren Porosität mit zunehmendem Abstand von der Reifeninnenfläche ebenfalls zunimmt. Dies entspricht einer Querschnittsverminderung bzw. -verjüngung. Als Material kommt beispielsweise schaumförmiger Kunststoff bzw. poröser Gummi in Frage. Eine derartige Ausführung bewirkt zusätzlich eine Dämpfung des Luftschalls im Innenraum des Reifens.

Bei den Reifen der Fig. 5 und 6 sind die Schwingungsabsorber an den Äußeren Seitenflächen angebracht. Sie sind als kreisringförmige Platten ausgebildet, können jedoch auch in kreisringsegmentförmige Platten aufgeteilt sein.

Bei den Schwingungsabsorbern 10 der Fig. 5 weisen die Platten sich verjüngende Querschnittsflächen auf. Sie sind mit ihren bezüglich des Querschnitts schmalen Enden zur Reifenwulst 3 hin gerichtet und sind mit ihren breiten Enden weiter zur Lauffläche 1 hin direkt an den Äußeren Reifenseitenflächen befestigt. Zwischen den Platten 10 und den Äußeren Seitenflächen der Reifen sind Dämpfungsschichten 11 angebracht, die sowohl mit den Reifenaußenflächen als auch mit den Platteninnenflächen verbunden sind. Die Dämpfungsschicht kann aus Schaumstoff bestehen und ist geeignet, die von den Schwingungsabsorbern vom Reifen weggeführte Schwingungsenergie zu übernehmen und in Wärme umzuwandeln und die Absorberschwingungen somit reflexionsfrei zu dämpfen.

Die schmalen Enden der Schwingungsabsorber sind aus Festigkeitsgründen jeweils am Reifen befestigt.

Die Schwingungsabsorber 9 beim Reifen der Fig. 6 sind ebenfalls kreisringförmige Platten, die sich verjüngende Querschiittsflächen aufweisen. Sie sind mit ihren bezüglich des Querschnitts schmalen Enden zur Lauffläche 1 hin gerichtet und mit ihren breiten Enden in der Nähe der Reifenwulst 3 befestigt. Dabei bleibt aufgrund der Plattensteifigkeit mit Ausnahme der breiten Enden auch bei schneller Reifenrotation ein Abstand zwischen den Äußeren Seitenflächen der Reifen und den Platten aufrechterhalten. Auch diese Schwingungsabsorber können beispielsweise aus textilfaserverstärktem Gummi bestehen und mit in radialer Richtung eingelagerten Dämpfungsfasern versehen sein. Aufgrund des zwischen dem Reifen und den Absorberplatten bestehenden Abstandes wirken letztere zusätzlich als Schallschirm für den noch von den Reifenseitenwänden ausgehenden Luftschall.

In den Fig. 7a,b sowie 8 a,b sind bandförmige Schwingungsabsorber dargestellt, die sowohl im Reifeninneren als auch an dessen Außerfläche angebracht werden können. Dabei ist eine Vielzahl einzelner, flacher, etwa dreieck- oder halbsichelförmig sich verjüngender Absorberelemente 12, 13 vorgesehen. Diese sind gemeinsam und nacheinander mit einem in Bandrichtung verlaufenden, flachen, auf die Reifenfläche aufzubringenden Steg 14, 15 einstückig verbunden. Zwischen den flachen Absorberelementen 12, 13 selbst und der Reifenfläche sind Dämpfungsschichten 16, 17 vorgesehen. Diese dienen wiederum der reflexionsfreien Dämpfung der in die flachen Absorberelemente eindringenden Schallwellen. Die Fig 7a und 8a stellen Teilstücke der Absorberbänder in Draufsicht dar, die Fig. 7b un 8b geben Querschnitte entlang den in den Fig. 7a und 8a dargestellten gestrichelten Linien wieder.

Die Erfindung bezieht sich in erster Linie auf schlauchlose Reifen. Es ist jedoch auch möglich, die Schläuche von Schlauchreifen so auszubilden, daß an ihren Innenflächen die oben geschilderten Schwingungsabsorber angebracht sind. Aufgrund des im Schlauch herrschenden Luftdruckes liegt jener so dicht an den Reifeninnenflächen an, daß eine gute Schallübertragung auf den Schlauch und die daran angebrachten Schwingungsabsorber gewährleistet ist.

**Patentansprüche**

1. Gasgefüllter Fahrzeugreifen, in dem mit dem Reifen oder Schlauch kraft- und momentschlüssig verbundene Schwingungsabsorber vorgesehen sind, wobei die aus einem Elastomer bestehenden Schwingungsabsorber (5) rohrförmig ausgebildet sind und im Querschnitt etwa die Form eines Kreis- oder Ellipsenringes mit exzentrischem Innenkreis bzw. exzentrischer Innenellipse aufweisen, und wobei die dickeren Rohrwandpartien mit der Reifen- bzw. Schlauchinnenfläche verbunden sind.

2. Gasgefüllter Fahrzeugreifen, in dem mit dem Reifen oder Schlauch kraft- und momentschlüssig verbundene Schwingungsabsorber vorgesehen sind, wobei die Schwingungsabsorber (6) im Querschnitt etwa Sichelform aufweisen, die Sichelmitte mit der der Lauffläche (1) gegenüberliegenden Reifen- bzw. Schlauchinnenfläche und die Sichelenden mit den zur Reifenwulst (3) hin gelegenen Bereichen der Reifen- bzw. Schlauchinnenfläche verbunden sind, derart, daß die zwischen Sichelmitte und Sichelenden gelegenen Bereiche der Schwingungsabsorber keinen Kontakt mit der Reifen- bzw. Schlauchinnenfläche haben.

3. Gasgefüllter Fahrzeugreifen, in dem mit dem Reifen oder Schlauch kraft- und momentschlüssig verbundene Schwingungsabsorber vorgesehen sind, wobei die Schwingungsabsorber (7) im Querschnitt etwa die Form von Halbsicheln aufweisen, deren spitze Enden mit der der Lauffläche (1) gegenüberliegenden Reifen- bzw. Schlauchinnenfläche und deren breite Enden mit den zur Reifenwulst (3) hin gelegenen Bereichen der Reifen- bzw. Schlauchinnenfläche verbunden sind.

4. Gasgefüllter Fahrzeugreifen, in den mit dem Reifen oder Schlauch kraft- und momentschlüssig verbundene Schwingungsabsorber vorgesehen sind, wobei die Schwingungsabsorber (8) als auf die Reifen- bzw. Schlauchinnenfläche aufgebrachte poröse Schichten ausgebildet sind, deren Porosität mit wachsendem Abstand von den Reifeninnenflächen zunimmt.

5. Gasgefüllter Fahrzeugreifen, an dem mit dem Reifen kraft- und momentschlüssig verbundene Schwingungsabsorber angebracht sind, wobei die Schwingungsabsorber als kreisring- oder kreisringsegmentförmige Platten (9, 10) ausgebildet und an den Äußeren Seitenflächen der Reifen befestigt sind.

6. Gasgefüllter Fahrzeugreifen nach Anspruch 5, wobei die Platten (9) sich verjüngende Querschnittsflächen aufweisen, mit ihren bezüglich des Querschnitts schmalen Enden zur Lauffläche (1) hin gerichtet und mit ihren breiten Enden in der Nähe der Reifenwulst (3) befestigt sind, und wobei aufgrund der Plattensteifigkeit mit Ausnahme der breiten Enden auch bei schneller Reifenrotation ein Abstand zwischen den Äußeren Seitenflächen der Reifen und den Platten aufrechterhalten bleibt.

7. Gasgefüllter Fahrzeugreifen nach Anspruch 5, wobei die Platten (10) sich verjüngende Querschnittsflächen aufweisen, mit ihren bezüglich des Querschnitts schmalen Enden zur Reifenwulst (3) hin gerichtet und mit ihren breiten Enden weiter zur Lauffläche (1) hin direkt an den Äußeren Seitenflächen der Reifen befestigt sind, und wobei zwischen den Platten (10) und den Äußeren Seitenflächen der Reifen, mit diesen sowie jenen verbunden, Dämpfungsschichten (11) angebracht sind.

8. Gasgefüllter Fahrzeugreifen, in dem mit dem Reifen oder Schlauch kraft- und momentschlüssig verbundene Schwingungsabsorber vorgesehen sind, wobei die Schwingungsabsorber bandförmig ausgebildet sind und eine Vielzahl einzelner, flacher, etwa dreieck- oder halbsichelförmig sich verjüngender Absorberelemente (12, 13) aufweisen, welche gemeinsam und nacheinander mit einem in Bandrichtung verlaufenden, flachen, auf die Reifen- oder Schlauchfläche aufgebrachten Steg (14, 15) einstückig verbunden sind, und wobei zwischen den flachen Absorberelementen (12, 13) selbst und der Reifen- oder Schlauchfläche eine Dämpfungsschicht (16, 17) vorgesehen ist.

## Claims

1. A gas-filled vehicle tyre, in which vibration absorbers connected in a force-locking and moment-locking manner to the tyre or inner tube are provided, wherein the vibration absorbers (5), consisting of an elastomer, are tubular in design and have, in cross-section, approximately the shape or a circular ring or elliptical ring having an eccentric inner circle or eccentric inner ellipse respectively, and wherein the thicker tube wall portions are connected to the inner surface of the tyre or inner tube respectively.

2. A gas-filled vehicle tyre, in which vibration absorbers connected in a force-locking and moment-locking manner to the tyre or inner tube are provided, wherein the vibration absorbers (6) have, in cross-section, approximately a crescent shape, the crescent centre is connected to that inner surface of the tyre or inner tube respectively which lies opposite to the tread (1) and the crescent ends are connected to those regions of the inner surface of the tyre or inner tube respectively which are situated towards the tyre bead (3), in such a way that those regions of the vibration absorbers which are situated between the crescent centre and the crescent ends have no contact with the inner surface of the tyre or inner tube respectively.

3. A gas-filled vehicle tyre, in which vibration absorbers connected in a force-locking and moment-locking manner to the tyre or inner tube are provided, wherein the vibration absorbers (7) have, in cross-section, approximately the shape of half-crescents the pointed ends of which are connected to that inner surface of the tyre or inner tube respectively which lies opposite to the tread (1) and the wide ends of which are connected to those regions of the inner surface of the tyre or inner tube respectively which are situated towards the tyre bead (3).

4. A gas-filled vehicle tyre, in which vibration absorbers connected in a force-locking and moment-locking manner to the tyre or inner tube are provided, wherein the vibration absorbers (8) are designed as porous layers which are applied to the inner surface of the tyre or inner tube respectively and the porosity of which increases with increasing distance from the tyre inner surfaces.

5. A gas-filled vehicle tyre, on which vibration absorbers connected in a force-locking and moment-locking manner to the tyre are fitted, wherein the vibration absorbers are designed as circular-ring-shaped or circular-ring-segment-shaped panels (9, 10) and are fastened to the outer side surfaces of the tyres.

6. A gas-filled vehicle tyre according to claim 5, in which the panels (9) have tapering cross-sectional areas, are directed by their ends which are narrow with respect to the cross-section towards the tread (1) and are fastened with their wide ends in the vicinity of the tyre bead (3), and wherein, by reason of the panel stiffness, with the exception of the wide ends, even upon rapid tyre rotation a spacing is maintained between the outer side surfaces of the tyres and the panels.

7. A gas-filled vehicle tyre according to claim 5, in which the panels (10) have tapering cross-sectional areas, are directed by their ends which are narrow with respect to the cross-section towards the tyre bead (3) and are fastened with their wide ends further towards the tread (1) directly to the outer side surfaces of the tyres, and in which installed between the panels (10) and the outer side surfaces of the tyres, and connected to these as well as to those, are damping layers (11).

8. A gas-filled vehicle tyre, in which vibration absorbers connected in a force-locking and moment-locking manner to the tyre or inner tube are provided, wherein the vibration absorbers are band-shaped in design and have a plurality of individual shallow absorber elements (12, 15) which taper in an approximately triangular or semi-crescent-shaped manner and which are jointly and successively connected in one piece to a flat web (14, 15) which extends in the band direction and which is applied to the surface of the tyre or inner tube, and in which a damping layer (16, 17) is provided between the flat absorber elements (12, 13) themselves and the surface of the tyre or inner tube.

## Revendications

1. Pneumatique empli de gaz pour véhicules dans lequel se trouvent des absorbeurs de vibrations assemblés par effet de forces et de couples audit pneumatique ou à la chambre à air, les absorbeurs de vibrations (5), constitués par un élastomère, étant établis en forme de tubes et ayant en section transversale à peu près la forme d'un anneau circulaire ou elliptique à cercle intérieur, ou ellipse intérieure, excentrique et les parties de paroi du tube plus épaisses étant reliées à la surface intérieure du pneumatique, ou de la chambre à air.

2. Pneumatique empli de gaz pour véhicules dans lequel se trouvent des absorbeurs de vibrations assemblés par effet de forces et de couples audit penumatique ou à la chambre à air, les absorbeurs de vibrations (6) ayant en section transversale à peu près la forme d'un croissant dont le milieu est relié à la surface intérieure, opposée à la surface de roulement (1), dudit pneumatique, ou de la chambre à air, et les extrémités aux zones de la surface intérieure du pneumatique, ou de la chambre à air, dirigées vers le talon (3) du pneumatique, en sorte que les zones des absorbeurs de rotation situées entre le milieu et les extrémités du croissant ne puissent pas avoir de contact avec la surface intérieure du pneumatique, ou de la chambre à air.

3. Pneumatique empli de gaz pour véhicules dans lequel existent des absorbeurs de vibrations assemblés par effet de forces et de couples audit pneumatique ou à la chambre à air, les absorbeurs de vibrations (7) ayant en section transversale à peu près la forme de demicroissants dont les extrémités pointues sont reliées à la surface intérieure du pneumatique, ou de la chambre à air, opposée à la surface de roulement (1), et les extrémités larges aux zones de la surface intérieure du pneumatique, ou de la chambre à air, situées vers le talon (3) du pneumatique.

4. Pneumatique empli de gaz pour véhicules dans lequel existent des absorbeurs de vibrations assemblés par effet de forces et de couples audit pneumatique ou à la chambre à air, les absorbeurs de vibrations (8) étant établis comme des couches poreuses qui sont appliquées sur la surface intérieure du pneumatique, ou de la chambre à air et dont la porosité augmente avec la distance aux surfaces intérieures du pneumatique.

5. Pneumatique empli de gaz pour véhicules sur lequel sont fixés des absorbeurs de vibrations assemblés par effet de forces et de couples audit pneumatique, les absorbeurs de vibrations étant établis comme des plaques (9, 10) en forme d'anneaux, ou de segments d'anneaux, circulaires et étant fixés aux surfaces latérales extérieures des pneumatiques.

6. Pneumatique empli de gaz pour véhicules selon la revendication 5 dans lequel les plaques (9) présentent des surfaces de section transversale allant en se rétrécissant, sont dirigées vers la surface de roulement (1) par leurs extrémités larges par rapport à la section transversale et sont fixées à proximité du talon (3) du pneumatique par leurs extrémités larges, un écart entre les surfaces latérales extérieures des pneumatiques et les plaques restant maintenu, même en cas de rotation rapide du pneumatique, et abstraction faite des extrémités larges, par suite de la rigidité des plaques.

7. Pneumatique empli de gaz pour véhicules selon la revendication 5 dans lequel les plaques (10) présentent des surfaces de section transversale allant en se rétrécissant, sont dirigées vers le talon (3) du pneumatique par leurs extrémités étroites par rapport à la section transversale et sont fixées par leurs extrémités larges, plus loin vers la surface de roulement (1), sur les surfaces latérales extérieures des pneumatiques, des couches amortisseuses (11) reliées aussi bien aux plaques (10) qu'aux surfaces latérales extérieures des pneumatiques étant rapportées entre les unes et les autres.

8. Pneumatique empli de gaz pour véhicules dans lequel se trouvent des absorbeurs de vibrations assemblé par effet de forces et de couples audit pneumatique ou à la chambre à air, les absorbeurs de vibrations étant établis en forme de rubans et comportant un grand nombre d'éléments absorbeurs (12, 13) individuels plats allant en se rétrécissant, par exemple en forme de triangles ou de demi-croissants, qui sont reliés en une seule pièce, en commun et successivement, à une nervure plate (14, 15) de même direction que le ruban rapportée sur la surface du pneumatique ou de la chambre à air, une couche amortisseuse (16, 17) étant en outre placée entre lesdits éléments absorbeurs plats (12, 13) eux-mêmes et la surface du pneumatique ou de la chambre à air.

Fig. 1

Fig. 2

Fig. 3

Fig. 4

Fig. 5

Fig. 6

Fig. 7a

Fig. 8a

Fig. 7b

Fig. 8b